# EUROPÄISCHE PATENTANMELDUNG

(11) **EP 4 234 993 A1**
(43) Veröffentlichungstag der Anmeldung: **30.08.2023**
(21) Anmeldenummer: 22158570.6
(22) Anmeldetag: 24.02.2022
(51) Int. Cl.: F16K 5/06, F16K 5/20

(54) **ABSPERRVORRICHTUNG MIT METALLISCHER DICHTUNG**

(71) Anmelder: Werner Hartmann GmbH & Co. KG, 29229 Celle (DE)
(72) Erfinder: Hartmann, Christian, 29229 Celle (DE)
(74) Vertreter: Freischem & Partner Patentanwälte mbB

(57) **Zusammenfassung**

Die Erfindung betrifft eine Absperrvorrichtung mit einem Gehäuse (10), das einen Absperrraum (12) aufweist und mit den Merkmalen des Oberbegriffs von Anspruch 1. Dabei liegt der Erfindung die Aufgabe zugrunde, eine Absperrvorrichtung bereitzustellen, die eine hohe Dichtwirkung, eine hohe Zuverlässigkeit der Dichtwirkung und einen hohen Verschleißwiderstand aufweist. Zur Lösung dieser Aufgabe ist bei der erfindungsgemäßen Absperrvorrichtung vorgesehen, dass
- die Dichteinrichtung (24) mindestens ein ringförmiges Dichtelement (26) und eine ringförmige, glattflächige Membran (28) aufweist,
- wobei das Dichtelement (26) und die Membran (28) den Zuströmabschnitt (20) und/oder dem Abströmabschnitt (22) umschließend in dem Gehäuse (10) angeordnet sind,
- wobei das Dichtelement (26) mit einer Dichtfläche (30) an dem Absperrkörper (14) anliegt und
- wobei das Dichtelement (26), die Membran (28), der Absperrkörper (14) und das Gehäuse (10) dichtend zusammenwirkend angeordnet sind.

## Beschreibung

Die vorliegende Erfindung betrifft eine Absperrvorrichtung mit einem Gehäuse, das einen Absperrraum aufweist, sowie
- einem drehbar oder verschiebbar in dem Absperrraum gelagerten Absperrkörper, welcher eine Durchgangsöffnung aufweist und über ein Stellglied derart angeordnet ist, dass der Absperrkörper in mindestens eine geöffnete Stellung und in mindestens eine geschlossene Stellung bringbar ist,
- mindestens einem Zuströmabschnitt und mindestens einem Abströmabschnitt zur Integration der Absperrvorrichtung in eine Fluidleitung,
- wobei der Zuströmabschnitt und der Abströmabschnitt in der geöffneten Stellung des Absperrkörpers mittels der Durchgangsöffnung durchströmbar verbunden sind und in der geschlossenen Stellung des Absperrkörpers der Zuströmabschnitt und der Abströmabschnitt fluidal separiert sind oder ein Durchfluss vom Zuströmabschnitt zum Abströmabschnitt zumindest gedrosselt ist
- und mindestens einer zwischen dem Absperrkörper und dem Gehäuse angeordneten Dichteinrichtung, mittels welcher der Absperrraum gegenüber dem Zuströmabschnitt und/oder dem Abströmabschnitt abgedichtet ist.

Absperrvorrichtungen sind aus der Praxis bekannt. Eine Absperrvorrichtung mit den vorstehenden Merkmalen ist beispielsweise in der Druckschrift CN 212407648 U offenbart. Die in dieser Druckschrift offenbarte Absperrvorrichtung betrifft eine Sitzstruktur für einen Absperrhahn mit einem Gehäuse, einer in dem Gehäuse angeordneten Kugel, welche als Absperrkörper dient, sowie einem als Zuströmabschnitt oder als Abströmabschnitt dienenden Rohrabschnitt. In dem Rohrabschnitt ist ein dichtend mit der Kugel zusammenwirkender Dichtring angeordnet. Der Dichtring ist nicht verformbar und in dem Rohrabschnitt in Richtung der Kugel vor und zurück bewegbar gelagert. Zum Zweck der Abdichtung des Absperrhahns presst eine in der Wandung des Rohrabschnitts angeordnete Feder den Dichtring gegen die Kugel. Ferner ist der Dichtring auf einer von der Kugel abgewandten Seite mittels einer elastisch leicht verformbaren Dichtung gegenüber dem Rohrabschnitt abgedichtet. Die elastische Dichtung ist ebenfalls ringförmig ausgebildet. Die Dichtung kann insbesondere als dünnwandiger Blechring mit im Querschnitt gewellter Form ausgebildet sein, welcher zumindest punktuell an dem Dichtring anliegt. Radial innen ist die elastische Dichtung mittels einer Schweißverbindung mit dem Dichtring sowie radial außen mittels einer weiteren Schweißverbindung dem Rohrabschnitt verbunden. Die elastische Dichtung soll ein Hinterströmen des Dichtrings mit einer in dem Rohrabschnitt befindlichen Flüssigkeit verhindern und gleichzeitig eine hohe Beweglichkeit des Dichtrings ermöglichen.

Wenn bei der aus der CN 212407648 U bekannten Sitzstruktur eine Flüssigkeit mit hohem Druck in dem Rohrabschnitt an der gewellt ausgebildeten, elastischen Dichtung ansteht, kann der hohe Druck zu einer starken Verformung und/oder hohen mechanischen Spannungen in dieser Dichtung führen. Die elastische Dichtung neigt dabei insbesondere zu einer radialen Aufweitung, da eine Verformung der elastischen Dichtung in einer axialen Richtung durch die von der Kugel abgewandte Seite des Dichtrings begrenzt ist. Die Neigung zur radialen Aufweitung induziert hohe mechanische Spannungen in den Schweißverbindungen mit dem Dichtring und dem Rohrabschnitt. Somit besteht bei einem hohen Fluiddruck in dem Rohrabschnitt die Gefahr, dass die Schweißverbindungen strukturell und in der Folge der Absperrhahn funktional versagen.

Der Erfindung liegt daher die Aufgabe zugrunde, eine Absperrvorrichtung bereitzustellen, die eine hohe Dichtwirkung, eine hohe Zuverlässigkeit der Dichtwirkung (unabhängig von einem Druck eines an der Absperrvorrichtung anstehenden Fluids) und einen hohen Verschleißwiderstand aufweist. Weiterhin soll die Absperrvorrichtung einfach montierbar und demontierbar sein.

Die Lösung der Aufgabe erfolgt erfindungsgemäß mit den Merkmalen des unabhängigen Anspruchs. Weitere praktische Ausführungsformen und Vorteile der Erfindung sind in Verbindung mit den abhängigen Ansprüchen beschrieben.

Die erfindungsgemäße Absperrvorrichtung umfasst ein Gehäuse mit einem Absperrraum und einen in dem Absperrraum gelagerten Absperrkörper. Der Absperrkörper weist eine Durchgangsöffnung auf und ist über ein Stellglied derart drehbar oder verschiebbar angeordnet, dass der Absperrkörper in mindestens eine geöffnete Stellung und in mindestens eine geschlossene Stellung bringbar ist. Zusätzlich umfasst die Absperrvorrichtung mindestens einen Zuströmabschnitt und mindestens einen Abströmabschnitt zur Integration der Absperrvorrichtung in eine Fluidleitung. Der Zuströmabschnitt und der Abströmabschnitt sind in der geöffneten Stellung des Absperrkörpers mittels der Durchgangsöffnung durchströmbar verbunden und in der geschlossenen Stellung des Absperrkörpers fluidal separiert. Es ist auch möglich, dass ein Durchfluss vom Zuströmabschnitt zum Abströmabschnitt in der geschlossenen Stellung des Absperrkörpers zumindest gedrosselt ist. Zwischen dem Absperrkörper und dem Gehäuse ist mindestens eine Dichteinrichtung angeordnet, mittels welcher der Absperrraum gegenüber dem Zuströmabschnitt und/oder dem Abströmabschnitt abgedichtet ist.

Eine Absperrvorrichtung mit den vorstehenden Merkmalen kann beispielsweise als Absperrhahn ausgebildet sein. Alternativ kann die Absperrvorrichtung beispielsweise als Absperrschieber ausgebildet sein.

Der Absperrraum ist zumindest teilweise in dem Gehäuse ausgebildet und derart gestaltet, dass der zumindest teilweise in dem Absperrraum angeordnete Absperrkörper keinen Kontakt zu einer Wandung des Absperrraums aufweist. Zu diesem Zweck ist mindestens eine Lagerung zum Lagern des Absperrkörpers und/oder des mit dem Absperrkörper fest verbundenen Stellglieds in oder an dem Gehäuse vorgesehen.

Das Gehäuse kann einteilig oder mehrteilig ausgebildet sein. Der mindestens eine Zuströmabschnitt und/oder der mindestens eine Abströmabschnitt können in dem einteiligen oder dem mehrteiligen Gehäuse ausgebildet sein. Beispielsweise kann das Gehäuse einteilig mit einem oder mehreren darin ausgebildeten Zuströmabschnitten und/oder mit einem oder mehreren darin ausgebildeten Abströmabschnitten ausgebildet sein. Alternativ oder zusätzlich können der mindestens eine Zuströmabschnitt und/oder der mindestens eine Abströmabschnitt separate Bauteile sein, die an einem einteiligen oder mehrteiligen Grundkörper angeordnet sind, beispielsweise indem ein oder mehrere Zuströmabschnitte und/oder ein oder mehrere Abströmabschnitte als separate Rohrabschnitte an dem Grundkörper angeflanscht sind. Hier und im Folgenden sind der Zuströmabschnitt und der Abströmabschnitt unabhängig von konstruktiven Details Bestandteile des Gehäuses.

Durch den mindestens einen Zuströmabschnitt kann ein Fluid, insbesondere ein Gas, eine Flüssigkeit oder ein Gemisch aus einem oder mehreren Gasen und einer oder mehreren Flüssigkeiten, aus einem stromaufwärts der Absperrvorrichtung angeordneten Abschnitt der Fluidleitung, in welche die Absperrvorrichtung integriert ist, in die Absperrvorrichtung strömen. Es ist auch möglich, dass eine Mehrzahl stromaufwärts der Absperrvorrichtung gelegener Abschnitte einer oder mehrerer Fluidleitungen mit einer Mehrzahl von Zuströmabschnitten der Absperrvorrichtung durchströmbar verbunden ist.

Durch den mindestens einen Abströmabschnitt kann ein Fluid von der Absperrvorrichtung in einen stromabwärts der Absperrvorrichtung angeordneten Abschnitt der Fluidleitung strömen. Es ist auch möglich, dass mehrere stromabwärts der Absperrvorrichtung gelegene Abschnitte einer oder mehrerer Fluidleitungen mit einer Mehrzahl von Abströmabschnitten der Absperrvorrichtung durchströmbar verbunden ist.

Der in dem Absperrraum gelagerte Absperrkörper kann in Abhängigkeit von der Art der Absperrvorrichtung unterschiedlich ausgebildet sein. In diesem Zusammenhang wird im Folgenden detaillierter auf den Absperrkörper einer als Absperrhahn ausgebildeten Absperrvorrichtung und einer als Absperrschieber ausgebildeten Absperrvorrichtung eingegangen.

Wenn die Absperrvorrichtung als Absperrhahn ausgebildet ist, ist der Absperrkörper äußerlich zumindest teilweise drehsymmetrisch ausgebildet und er ist drehbar um eine Drehachse in dem Absperrraum gelagert. Die Durchgangsöffnung ist quer zu der Drehachse orientiert. Mittels des Stellglieds ist der Absperrkörper um die Drehachse in dem Absperrraum drehbar. Insbesondere kann der Absperrkörper im Wesentlichen die Form eines Zylinders, einer Kugel oder eines Ellipsoids aufweisen. Von der drehsymmetrischen Form weicht der Absperrkörper insbesondere aufgrund der Durchgangsöffnung ab. Auch im Bereich der Lagerung der Verbindung des Absperrkörpers mit dem Stellglied kann der Absperrkörper von der drehsymmetrischen Form abweichen. Wenn der Absperrkörper mittels des Stellglieds gedreht wird, die Oberfläche des drehsymmetrischen Absperrkörpers an der mindestens einen Dichteinrichtung, welche den Absperrraum gegenüber dem Zuströmabschnitt und/oder dem Abströmabschnitt abdichtet, vorbeibewegt.

Wenn die Absperrvorrichtung als Absperrschieber ausgebildet ist, ist der Absperrkörper ein Schieber, welcher im Wesentlichen die Form einer ebenen Platte aufweist. Der Schieber ist in dem Absperrraum in einer Ebene angeordnet und die Durchgangsöffnung ist quer zu der Ebene orientiert in dem Schieber eingebracht. Mittels des Stellglieds kann der Schieber mit der Durchgangsöffnung in der Ebene, in welcher der Schieber angeordnet ist, verschoben werden. Das Verschieben des Schiebers kann auch eine Drehung des Schiebers um eine parallel zur Durchgangsöffnung orientierte Drehachse umfassen. Wenn der Schieber mittels des Stellglieds verschoben wird, wird die Oberfläche des Schiebers an der mindestens einen Dichteinrichtung, welche den Absperrraum gegenüber dem Zuströmabschnitt und/oder dem Abströmabschnitt abdichtet, vorbeibewegt.

Aufgrund der drehbaren oder verschiebbaren Lagerung des Absperrkörpers ist eine Mehrzahl verschiedener Stellungen des Absperrkörpers einstellbar. Wenn der Absperrkörper drehbar ist, wie oben beschrieben, unterscheiden sich diese verschiedenen Stellungen im Wesentlichen durch die Orientierung der in dem Absperrkörper ausgebildeten Durchgangsöffnung bezüglich des Zuströmabschnitts und des Abströmabschnitts. Wenn der Absperrkörper verschiebbar ist, wie oben beschrieben, unterscheiden sich diese verschiedenen Stellungen im Wesentlichen durch die Parallelverschiebung der in dem Absperrkörper ausgebildeten Durchgangsöffnung bezüglich des Zuströmabschnitts und des Abströmabschnitts.

Der Absperrkörper kann inkrementell oder stufenlos drehbar oder verschiebbar in dem Absperrraum gelagert sein, so dass eine beliebige Anzahl von Stellungen des Absperrkörpers einstellbar sein kann. Wenn in einer Stellung des Absperrkörpers der mindestens eine Zuströmabschnitt und/oder der mindestens eine Abströmabschnitt von der Oberfläche des Absperrkörpers abgedeckt sind/ist und diese somit fluidal voneinander separiert sind, befindet sich der Absperrkörper in der geschlossenen Stellung. In der geschlossenen Stellung der Absperrvorrichtung dichtet die mindestens eine Dichteinrichtung den Absperrraum gegenüber dem Zuströmabschnitt und/oder dem Abströmabschnitt ab. Zu diesem Zweck wirkt die Dichteinrichtung mit dem Absperrkörper und dem Gehäuse zusammen. Weitere Einzelheiten der Dichteinrichtung werden im Folgenden noch beschrieben.

Wenn in einer Stellung des Absperrkörpers der mindestens eine Zuströmabschnitt und der mindestens eine Abströmabschnitt nicht von der Oberfläche des Absperrkörpers abgedeckt ist, sondern durchströmbar verbunden sind, befindet sich der Absperrkörper in einer geöffneten Stellung, in welcher eine Fluidströmung in der Fluidleitung, in welche die Absperrvorrichtung integriert ist, freigegeben ist. In der geöffneten Stellung des Absperrkörpers sind die Durchgangsöffnung, der Zuströmabschnitt, der Abströmabschnitt und die mindestens eine Dichteinrichtung vorzugsweise entlang einer gleichen oder zumindest parallelen oder im Wesentlichen parallelen Achse angeordnet. Eine Orientierung entlang einer solchen Achse wird im Folgenden als koaxiale Richtung bezeichnet.

Wie weiter oben beschrieben, ist es möglich, dass die Absperrvorrichtung mehr als einen Zuströmabschnitt und/oder mehr als einen Abströmabschnitt aufweist. In diesem Fall können mehrere geöffnete Stellungen durch den Absperrkörper eingenommen werden. Wenn beispielsweise zwei Zuströmabschnitte und zwei Abströmabschnitte vorgesehen sind, ist der Absperrkörper in eine erste geöffnete Stellung bringbar, in welcher der erste Zuströmabschnitt mit dem ersten Abströmabschnitt durchströmbar verbunden ist. Alternativ ist der Absperrkörper in eine zweite geöffnete Stellung bringbar, in welcher der zweite Zuströmabschnitt mit dem zweiten Abströmabschnitt durchströmbar verbunden ist. Es können auch weitere Zuströmabschnitte und/oder Abströmabschnitte vorgesehen sein, welche zu entsprechend der vorstehenden Beschreibung weiteren geöffneten Stellungen des Absperrkörpers führen können.

Zur Montage und Demontage des Absperrkörpers und/oder der Dichteinrichtung kann das Gehäuse mindestens eine von außen zugängliche und verschließbare Öffnung aufweisen. Durch diese Öffnung kann auch das Stellglied zum Drehen des Absperrkörpers aus dem Gehäuse herausgeführt sein.

Wenn das Gehäuse mehrteilig ausgebildet ist, kann das Gehäuse derart gestaltet sein, dass zunächst der Absperrkörper und/oder die Dichteinrichtung in einem Teilelement oder verschiedenen Teilelementen des Gehäuses angeordnet werden und die Mehrzahl der Teilelemente mit dem darin angeordneten Absperrkörper und/oder der darin angeordneten Dichteinrichtung anschließend zu dem Gehäuse zusammengesetzt wird. Beispielsweise kann das Gehäuse aus einer Mehrzahl von Teilelementen ausgebildet sein, wobei ein erstes Teilelement den Absperrraum umfasst, ein zweites Teilelement den Zuströmabschnitt umfasst und ein drittes Teilelement den Abströmabschnitt umfasst, und wobei die Teilelemente mit dem Zuströmabschnitt und dem Abströmabschnitt beispielsweise jeweils mittels einer Flanschverbindung mit dem den Absperrraum umfassenden Teilelement verbunden werden können. In diesem Fall kann der Absperrkörper beispielsweise durch eine verschließbare Öffnung oder eine der Flanschverbindungen in den Absperrraum eingebracht werden. Und die mindestens eine Dichteinrichtung kann in dem Zuströmabschnitt und/oder dem Abströmabschnitt angeordnet werden, bevor die Teilelemente des Gehäuses miteinander verbunden werden.

Zur Lösung der vorstehend genannten Aufgabe weist die Dichteinrichtung der erfindungsgemäßen Absperrvorrichtung mindestens ein ringförmiges Dichtelement und eine ringförmige, glattflächige Membran auf. Das Dichtelement und die Membran sind den Zuströmabschnitt und/oder den Abströmabschnitt umschließend in dem Gehäuse angeordnet. Insbesondere sind das Dichtelement und die Membran koaxial mit dem Zuströmabschnitt und/oder dem Abströmabschnitt in dem Gehäuse angeordnet. Dabei liegt das Dichtelement mit einer Dichtfläche an der zum Zuströmabschnitt oder zum Abströmabschnitt weisenden Oberfläche des Absperrkörpers an. Ferner sind das Dichtelement, die Membran, der Absperrkörper und das Gehäuse dichtend miteinander zusammenwirkend angeordnet. Mit anderen Worten ausgedrückt, dichten das Dichtelement und die Membran den Absperrraum gegenüber dem Zuströmabschnitt und/oder dem Abströmabschnitt ab, indem das Dichtelement mit der Dichtfläche dichtend an dem Absperrkörper anliegt und die Membran jeweils zumindest mit einem Abschnitt dichtend an dem Dichtelement und an dem Gehäuse anliegt.

Der Absperrkörper und das Dichtelement sind aus verschleißfesten Materialien gebildet. Insbesondere wird auf folgende Materialpaarungen aus Absperrkörper und Dichtelement verwiesen:
1. Oberflächengehärtete Materialien;
2. Mit Hartbeschichtungen versehene Oberfläche, z.B. HVOF-.B eschichtungen (High Velocity Oxygen Fuel)

Beispielsweise können der Absperrkörper und/oder das Dichtelement aus einem Metall oder einer Legierung, insbesondere Stahl, gebildet sein. Wenn der Absperrkörper und das Dichtelement aus einem Metall oder einer Legierung gebildet sind, wird die Absperrvorrichtung in der Praxis als Absperrvorrichtung mit metallischer Dichtung bezeichnet. Es wird darauf hingewiesen, dass die Erfindung auch für Absperrvorrichtungen geeignet ist, bei welchen der der Absperrkörper und/oder das Dichtelement nicht aus einem Metall oder einer Legierung, sondern aus anderen verschleißfesten Materialien gebildet sind/ist. Beispielsweise können der Absperrkörper und/oder das Dichtelement aus einem keramischen Werkstoff oder einem verschleißfesten Verbundwerkstoff gebildet sein. Der verschleißfeste Verbundwerkstoff kann insbesondere ein Metall, eine Legierung oder einen keramischen Werkstoff enthalten.

Die Dichtfläche ist wie das Dichtelement ringförmig ausgebildet und kann einen größeren Durchmesser aufweisen als die Durchgangsöffnung in dem Absperrkörper. Dadurch kann die Dichtfläche in der geöffneten Stellung des Absperrkörpers die Durchgangsöffnung dichtend umschließen.

Die ringförmige, glattflächige Membran ist eine ringförmige Dichtung mit einer im Vergleich zu dem ringförmigen Dichtelement geringen Wandstärke in der koaxialen Richtung. Glattflächig bedeutet, dass die Membran in einem entlang des Durchmessers gebildeten Querschnitt eine ebene oder einfach gekrümmte Form aufweist, d.h. nur in einer Richtung gekrümmt ist. Von der glattflächigen Membran ist insbesondere eine Membran mit mehr als einer Krümmung im Querschnitt abzugrenzen, also beispielsweise eine im Querschnitt zweifach gekrümmte oder gewellt ausgebildete Dichtung. Die ringförmige, glattflächige Membran ist elastisch verformbar und derart in dem Gehäuse angeordnet, dass zumindest ein von dem Absperrkörper abgewandter Oberflächenabschnitt der Membran mit dem Zuströmabschnitt und/oder dem Abströmabschnitt fluidal verbunden ist. Dadurch kann ein Fluid in der Fluidleitung, in welcher die Absperrvorrichtung integriert ist, an dem von dem Absperrkörper abgewandten Oberflächenabschnitt der Membran anstehen und eine zum Absperrkörper gerichtete Kraft auf die Membran ausüben. Diese Kraft kann auf das ringförmige Dichtelement übertragen werden, welches aufgrund der übertragenen Kraft schließlich mit der Dichtfläche gegen den Absperrkörper gedrückt wird.

Für eine hohe Kraftübertragung von der Membran auf das ringförmige Dichtelement können die Membran und das ringförmige Dichtelement in der koaxialen Richtung sich zumindest teilweise überlagernd angeordnet sein. Insbesondere kann ein Bereich der Membran mit dem von dem Absperrkörper abgewandten und mit dem Zuströmabschnitt oder dem Abströmabschnitt fluidal verbundenen Oberflächenabschnitt des Dichtelements in der koaxialen Richtung überlagernd angeordnet sein. In diesem Fall kann die elastisch verformbare Membran von dem Fluiddruck teilweise an den Oberflächenabschnitt der von dem Absperrkörper abgewandten Seite des Dichtelements angedrückt werden. Das Dichtelement wird dann mit der Dichtfläche gegen den Absperrkörper gedrückt. Somit ist es möglich, dass eine Dichtwirkung zwischen der Membran und dem Dichtelement sowie zwischen dem Dichtelement und dem Absperrkörper allein durch ein an der Membran anstehendes Fluid erzielt wird. Eine feste Verbindung zwischen der Membran und dem Dichtelement ist dabei nicht zwingend erforderlich. Zusätzlich kann auch das ringförmige Dichtelement einen Oberflächenabschnitt aufweisen, der derart ausgebildet ist, dass das Dichtelement direkt von dem Fluiddruck gegen den Absperrkörper gedrückt wird.

Durch die erfindungsgemäße Absperrvorrichtung wird eine einfache Montage ermöglicht, da die Absperrvorrichtung nur wenige Bestandteile, insbesondere in der Dichteinheit, aufweist. Ferner können durch die Absperrvorrichtung eine besonders hohe Dichtwirkung sowie eine hohe Zuverlässigkeit der Dichtwirkung erzielt werden. Insbesondere ermöglichen die Ausbildung und Anordnung der glattflächigen Membran eine Aufnahme von hohen, auf die Dichteinrichtung wirkenden Fluiddrücken. Das ist vorteilhaft, weil die erfindungsgemäße Absperrvorrichtung dadurch in einem weiten Druckbereich bis zu hohen Fluiddrücken anwendbar ist. Mit steigendem Fluiddruck wird die Dichtwirkung verbessert, weil die Dichtfläche des ringförmigen Dichtelements mit einer höheren Kraft gegen den Absperrkörper gedrückt wird. Bei hohen Fluiddrücken ist die Ausbildung des Absperrkörpers und des ringförmigen Dichtelements aus verschleißfesten Materialen geeignet, um einen geringen Verschleiß, eine hohe Dichtwirkung und eine lange Standzeit der Absperrvorrichtung zu erzielen.

Bei einer geeigneten Weiterbildung der Absperrvorrichtung können eine Wirkfläche 1 auf der von dem Absperrkörper abgewandten Seite des Dichtelements und eine Wirkfläche 2 auf einer dem Absperrkörper zugewandten Seite des Dichtelements in fluidaler Verbindung mit dem Absperrraum ausgebildet sein und fluidal von dem Zuströmabschnitt und/oder dem Abströmabschnitt getrennt sein. Dabei ist die Wirkfläche 1 größer ist als die Wirkfläche 2.

Die von dem Absperrkörper abgewandte Seite des Dichtelements weist einen oder mehrere Abschnitte auf, welcher/welche in fluidaler Verbindung mit dem Absperrraum steht/stehen und senkrecht oder geneigt zu der koaxialen Richtung ausgerichtet sein kann/können. Bei senkrechter Ausrichtung verläuft die Normale auf die Wirkfläche parallel zu der koaxialen Richtung. Wenn dieser Abschnitt/diese Abschnitte senkrecht zu der koaxialen Richtung ausgerichtet ist, ist dieser Abschnitt/sind diese Abschnitte die Wirkfläche 1. Wenn dieser Abschnitt/diese Abschnitte gegenüber der koaxialen Richtung geneigt ausgerichtet ist/sind, kann er/können sie in zwei virtuelle Flächenkomponenten aufgeteilt werden, wobei die erste virtuelle Flächenkomponente senkrecht zur koaxialen Richtung ausgerichtet ist und die zweite virtuelle Flächenkomponente orthogonal dazu ausgerichtet ist. In diesem Fall ist die senkrecht zur koaxialen Richtung orientierte virtuelle Flächenkomponente die Wirkfläche 1. Beispielsweise kann die Wirkfläche 1 der oben beschriebene Oberflächenabschnitt der von dem Absperrkörper abgewandten Seite des Dichtelements sein, mit dem ein Bereich der Membran überlagernd angeordnet ist. Alternativ kann die Wirkfläche 1 ein Teilbereich dieses Oberflächenabschnitts sein.

Die dem Absperrkörper zugewandte Seite des Dichtelements weist entsprechend der vorstehenden Beschreibung ebenfalls einen in fluidaler Verbindung mit dem Absperrraum stehenden, parallel oder geneigt zu der koaxialen Richtung ausgerichteten Abschnitt auf, welcher die Wirkfläche 2 umfasst. Die Wirkfläche 2 ist der Wirkfläche 1 entgegengerichtet angeordnet und sie ist kleiner als die Wirkfläche 1.

Die Wirkfläche 1 und die Wirkfläche 2 sind fluidal von dem Zuströmabschnitt und/oder dem Abströmabschnitt getrennt. Beispielsweise kann die Trennung mittels der zwischen dem Dichtelement und dem Gehäuse angeordneten Membran erfolgen. Zum Zweck der fluidalen Trennung kann die Membran mit dem Dichtelement verbunden sein. Einige Möglichkeiten zur Verbindung der Membran mit dem Dichtelement werden weiter unten im Detail beschrieben.

Aufgrund der vorstehend beschriebenen Ausbildung des Dichtelements mit der Wirkfläche 1 und der Wirkfläche 2 wird das Dichtelement selbst dann gegen den Absperrkörper gepresst, wenn ein hoher Innendruck in dem Absperrraum vorliegt. Denn die Wirkfläche 1, über welche der Innendruck eine Kraft in Richtung des Absperrkörpers ausübt, ist größer ist als die Wirkfläche 2, über welche der Innendruck eine vom Absperrkörper weg gerichtete Kraft ausübt. Somit wirkt die Absperrvorrichtung selbst dann abdichtend, wenn Fluid in den Absperrraum eingedrungen ist. In der Praxis wird diese Funktion als "Double-Piston-Funktion" bezeichnet. Die "Double-Piston-Funktion" kann vorteilhaft genutzt werden, wenn in einer Absperrvorrichtung einströmseitig und abströmseitig ein Dichtelement mit "Double-Piston-Funktion" eingesetzt ist. Versagt in einem solchen Fall das eine Dichtelement, beispielsweise einströmseitig, kommt es zu einem Durchströmen des Absperrraums, so dass das andere Dichtelement aufgrund der "Double-Piston-Funktion" ein Durchströmen des Fluides von der Einströmseite zur Abströmseite verhindert. Es existiert damit eine doppelte Barriere, die zu einer erhöhten Sicherheit der Armatur führt.

Bei einer weiteren praktischen Ausbildung der Absperrvorrichtung ist die ringförmige Membran auf der von dem Absperrkörper abgewandten Seite des Dichtelements radial innenseitig mit einem radial innenseitigen Bereich des ringförmigen Dichtelements verbunden. Der radial innenseitige Bereich des ringförmigen Dichtelements umfasst insbesondere die innere Hälfte der von dem Absperrkörper abgewandten Seite des Dichtelements und vorzugsweise das innere Drittel beginnend vom radial inneren Umfang. Es ist nicht erforderlich, die Membran mit dem gesamten radial innenseitigen Bereich des Dichtelements zu verbinden. Es genügt, wenn die Membran radial innenseitig im radial innenseitigen Bereich des Dichtelements mit dem Dichtelement verbunden ist. Die Verbindung kann in der Umfangsrichtung kontinuierlich oder punktuell ausgebildet sein. Die Verbindung kann ferner vollständig dichtend oder nicht vollständig dichtend ausgebildet sein. Um eine vollständig dichtende Verbindung herzustellen, wird die Verbindung vorzugsweise durch eine kontinuierliche, umlaufende Schweißnaht erzeugt.

Wie weiter oben beschrieben, ist die vorstehend beschriebene Verbindung der Membran mit dem Dichtelement für die Dichtwirkung der Absperrvorrichtung nicht zwingend erforderlich. Denn wenn die Membran und das Dichtelement in der koaxialen Richtung zumindest teilweise überlagernd angeordnet sind, kann ein auf den vom Absperrkörper abgewandten Oberflächenabschnitt der Membran wirkendes Fluid die Membran gegen das Dichtelement und das Dichtelement gegen den Absperrkörper drücken. Die Verbindung der Membran mit dem Dichtelement kann allerdings die Dichtwirkung der Absperrvorrichtung erhöhen, insbesondere dann, wenn ein geringer Fluiddruck auf die Membran wirkt und die Verbindung vollständig dichtend ausgebildet ist. Zusätzlich kann aufgrund der Verbindung die Montage der Absperrvorrichtung vereinfacht sein, weil wenige Bestandteile der Dichteinrichtung bestimmungsgemäß zu positionieren sind. Die Verbindung zwischen der Membran und dem Dichtelement ist ferner geeignet, um den Absperrraum auf zuverlässige Weise fluidal von dem Zuströmabschnitt und/oder dem Abströmabschnitt zu trennen und somit eine "Double-Piston-Funktion" mit der Absperrvorrichtung erzielen zu können. Dabei erzielt die radial innenseitige Verbindung der Membran mit dem radial innenseitigen Bereich des ringförmigen Dichtelements eine fluidale Verbindung eines großen Abschnitts der von dem Absperrkörper abgewandten Seite des Dichtelements und somit eine Ausbildung einer großen Wirkfläche 1. Über eine große Wirkfläche 1 kann eine große Kraft von einem in den Absperrraum eingedrungenen Fluid auf das Dichtelement in Richtung des Absperrkörpers wirken.

In der Praxis können die ringförmige Membran und das Dichtelement stoffschlüssig und/oder durch Klemmen miteinander verbunden sein. Durch stoffschlüssige Verbindung kann auf einfache Weise eine vollständig abdichtende Verbindung realisiert werden. Beispielsweise können die Membran und das Dichtelement mit einer Schweißverbindung, einer Lötverbindung und/oder einer Klebeverbindung miteinander verbunden sein. Wenn das Dichtelement und die Membran aus dem gleichen Material gebildet sind, ist auch möglich, das Dichtelement und die Membran einstückig auszubilden. Dadurch kann eine zusätzliche Verbindung vermieden werden, allerdings ist die einstückige Ausbildung in der Praxis nur schwierig herstellbar. Alternativ können die ringförmige Membran und das Dichtelement auch mittels einer Klemmverbindung, d.h. durch Verpressen, miteinander verbunden sein. Eine solche Verbindung ist bei einer Demontage der Absperrvorrichtung leicht und zerstörungsfrei lösbar. In diesem Zusammenhang wird auch auf die Möglichkeit verwiesen, die Membran mittels einer Klemm- und/oder Schraubverbindung mit einem im Gehäuse angeordneten Lager zu fixieren.

Bei einer weiteren praktischen Ausführungsform kann die ringförmige Membran radial außenseitig formschlüssig und/oder kraftschlüssig gegenüber dem Gehäuse fixiert sein. Eine formschlüssige Fixierung der Membran in radialer Richtung kann beispielsweise durch einen Absatz in dem Gehäuse, an welchem die ringförmige Membran in radialer Richtung anliegt, erzielt werden. Eine formschlüssige Fixierung der Membran in der koaxialen Richtung kann beispielsweise durch eine Schraubenverbindung, eine Bolzenverbindung oder durch die Anordnung eines Montageelements an der Membran erzielt werden. Auf das Montageelement wird weiter unten detaillierter eingegangen. Eine kraftschlüssige Fixierung der Membran in der koaxialen Richtung kann beispielsweise erzielt werden, indem die Membran in radialer Richtung das Gehäuse eingepresst ist.

In der Praxis kann die Dichteinrichtung mindestens ein elastisches Element aufweisen, welches derart angeordnet ist, dass es das Dichtelement mit einer Kraft Fd gegen den Absperrkörper drückt. Das elastische Element kann in dem Gehäuse gelagert sein. Es kann direkt oder indirekt mit einer Kraft Fd auf das Dichtelement wirken. Mit dem elastischen Dichtelement können die Dichtwirkung und die Zuverlässigkeit der Absperrvorrichtung erhöht werden. Denn wenn die Dichteinrichtung das elastische Element aufweist, kann die das Dichtelement gegen den Absperrkörper drückende Kraft von einem Fluid und/oder von dem elastischen Element hervorgerufen werden. Das elastische Element kann beispielsweise eine in dem Gehäuse gelagerte und gegen das Dichtelement drückende Druckfeder sein. Zusätzlich oder alternativ kann das elastische Element eine in dem Gehäuse gelagerte und gegen die Membran drückende Druckfeder sein. Wenn die Druckfeder gegen die Membran drückt, kann die Kraft der Druckfeder von der Membran auf das Dichtelement übertragen werden. Zusätzlich oder alternativ ist es auch möglich, dass das elastische Element als Dauermagnet oder ein Elektromagnet ausgebildet ist, welcher das Dichtelement gegen den Absperrkörper drückt. Wenn das elastische Element ein Magnet ist, enthält das Dichtelement zumindest eine magnetisch beeinflussbare Zone. Beispielsweise können das elastische Element und das Dichtelement einander entgegen gerichtete Magneten sein.

In einer weiteren Ausführungsform kann die Membran in ihrem bestimmungsgemäßen Einbauzustand zusätzlich oder alternativ mechanisch vorgespannt und so angeordnet sein, dass das Dichtelement mittels der Membran gegen den Absperrkörper gedrückt wird. Die mechanische Vorspannung wird erzielt, indem die Membran in der bestimmungsgemäßen Anordnung in der Absperrvorrichtung gegenüber einem entspannten Zustand der Membran außerhalb der Absperrvorrichtung elastisch verformt ist. Beispielsweise kann die Membran in einem entspannten Zustand außerhalb der Absperrvorrichtung im Querschnitt eine einfach gekrümmte Form aufweisen. In der bestimmungsgemäßen Anordnung der Membran in der Absperrvorrichtung kann die Membran elastisch zu einer im Querschnitt ebenen oder zumindest im Wesentlichen ebenen Membran verformt sein. Alternativ kann die Membran in einem entspannten Zustand außerhalb der Absperrvorrichtung im Querschnitt eine ebene Form aufweisen und im bestimmungsgemäßen Einbauzustand einfach gekrümmte sein. Die elastische Verformung erzeugt eine in die entspannte Form gerichtete Rückstellkraft. Mit dieser Rückstellkraft kann das Dichtelement zusätzlich oder alternativ gegen den Absperrkörper gedrückt werden, weil die Membran jeweils zumindest mit einem Abschnitt an dem Dichtelement und an dem Gehäuse anliegt.

Das Dichtelement kann in der Praxis auf der von dem Absperrkörper abgewandten Seite zumindest teilweise derart in Richtung des Absperrkörpers geneigt und/oder gekrümmt sein, dass ein Spaltmaß zwischen dem Dichtelement und der Membran in radialer Richtung zunimmt. Es kann demgemäß ein Spalt zwischen dem Abschnitt der der von dem Absperrkörper abgewandten Seite des Dichtelements und der Membran existieren, welcher in radialer Richtung größer wird. Beispielsweise kann ein Oberflächenabschnitt der von dem Absperrkörper abgewandten Seite des Dichtelements, mit welchem die Membran überlagernd angeordnet ist, in Richtung des Absperrkörpers geneigt und/oder gekrümmt sein. Wenn sich ein Fluid in dem Zuströmabschnitt und/oder dem Abströmabschnitt befindet und mit einem Fluiddruck auf den von dem Absperrkörper abgewandten Oberflächenabschnitt der Membran drückt, kann die Membran aufgrund des in der radialen Richtung zunehmenden Spaltmaßes mit zunehmendem Fluiddruck langsam gegen das Dichtelement gedrückt werden. Im Ergebnis kann eine schlagartige Belastung der Absperrvorrichtung, beispielsweise wenn ein Fluid innerhalb einer kurzen Zeit den Zuströmabschnitt und/oder den Abströmabschnitt flutet, verhindert werden.

Die Dichteinrichtung kann bei einer Ausführungsform radial außenseitig ein dicht gegenüber dem Gehäuse angeordnetes Montageelement aufweisen, welches die Membran radial außenseitig in dem Gehäuse fixiert. Für die Fixierung der Membran in dem Gehäuse weisen das Montageelement und die Membran einen gemeinsamen Kontaktbereich auf, welcher dicht ausgebildet ist. Das Montageelement und das Gehäuse können insbesondere geometrisch komplementär ausgebildet sein, so dass das Montageelement in einer vordefinierten Position und/oder Lage in dem Gehäuse anordenbar ist. Aufgrund des Montageelements werden eine einfache Montage und eine sichere Fixierung der Membran in der Absperrvorrichtung ermöglicht. Das Montageelement kann beispielsweise ein koaxial mit der Membran und dem Dichtelement in dem Gehäuse angeordneter Ring sein, welcher die Membran in der radialen Richtung ohne oder mit geringem Spiel umgreift. Ferner kann das Montageelement die Membran in der koaxialen Richtung dichtend gegen das Gehäuse drücken.

In der Praxis kann das Montageelement insbesondere lösbar in dem Gehäuse fixiert sein. Beispielsweise kann es mittels einer Schraubenverbindung und/oder einer Bolzenverbindung in dem Gehäuse angeordnet sein. Durch die lösbare Fixierung des Montageelements ist es möglich, die Dichteinrichtung vollständig oder teilweise aus der Absperrvorrichtung zu entnehmen, beispielsweise um Wartungsarbeiten durchzuführen und/oder Komponenten der Dichteinrichtung auszuwechseln.

Weiter zusätzlich oder alternativ kann das Montageelement auf einer von dem Absperrkörper abgewandten Seite einen umlaufenden, hervorragenden Absatz aufweisen, welcher in einer in dem Gehäuse komplementär ausgebildeten Nut angeordnet ist. In diesem Fall ist zusätzlich ein umlaufendes statisches Dichtelement in der Nut angeordnet. Durch den Absatz und die Nut kann das Montageelement einfach in der bestimmungsgemäßen Position angeordnet werden. Aufgrund des umlaufenden statischen Dichtelements und der dicht ausgebildeten Kontaktfläche zwischen dem Montageelement und der Membran ist der Absperrraum sicher gegenüber dem Zuströmabschnitt und/oder dem Abströmabschnitt abgedichtet. Das umlaufende statische Dichtelement kann beispielsweise ein statischer Dichtring sein.

In der Praxis können die ringförmige Membran und das Montageelement stoffschlüssig und/oder durch Klemmen miteinander verbunden sein. Insbesondere bei stoffschlüssiger Verbindung ist die gemeinsame Kontaktfläche zwischen der Membran und dem Montageelement besonders zuverlässig dichtend ausgebildet. Bei klemmender Verbindung ist die Montage und Demontage der Dichteinrichtung besonders einfach und zerstörungsfrei möglich.

Bei einer weiteren Ausführungsform kann die Membran aus einem Metall, einer Legierung oder einem Kunststoff gebildet sein. Die Membran kann auch ein Komposit dieser Werkstoffe aufweisen. Eine Membran aus einem Metall oder einer Legierung, insbesondere Stahl, kann eine hohe Festigkeit, eine geeignete elastische Verformbarkeit und/oder einen hohen Verschleißwiderstand aufweisen. Eine Membran aus einem Kunststoff kann äußerst korrosionsbeständig sein. Ein Komposit aus einem Metall und einem Kunststoff kann die vorteilhaften Eigenschaften der beiden Werkstoffe kombinieren.

Die Membran kann, wie vorstehend beschrieben, als ringförmige Membran ausgebildet sein. Alternativ kann die Membran in der Praxis als ein Paket aus einer Mehrzahl von parallel angeordneten Blechen gebildet sein. Die in dem Paket parallel angeordneten Bleche weisen dann jeweils die Form eines in der koaxialen Richtung flachen Rings auf, wobei die Gesamtstärke der in dem Paket angeordneten Bleche im Querschnitt im Wesentlichen identisch mit der Wandstärke einer aus einem einzelnen Ring gebildete Membran sein kann. Die parallel angeordneten Bleche können sich bei einer Belastung aufgrund eines auf die Membran wirkenden Fluiddrucks in der koaxialen Richtung gegeneinander abstützen und in der radialen Richtung gegeneinander verschieben. Dadurch wird eine besonders hohe elastische Verformbarkeit in Kombination mit einer hohen Festigkeit der Membran erzielt.

Die Absperrvorrichtung kann in der Praxis für mindestens einen der folgenden Parameterbereiche ausgelegt sein:
- Nennweite der Fluidleitung: 0,5" bis 56";
- Druck in der Fluidleitung: Vakuum bis 1500 bar;
- Temperatur des Fluids in der Fluidleitung: -200°C bis +650°C.

Zusätzlich oder alternativ kann die Absperrvorrichtung in der Praxis als Kugelhahn ausgebildet sein. Der Absperrkörper kann dann im Wesentlichen die Form einer Kugel aufweisen. Wenn die Absperrvorrichtung als Kugelhahn ausgebildet ist, kann dieser zusätzlich oder alternativ zu dem Zuströmabschnitt und/oder dem Abströmabschnitt einen Schleusenstutzen zum Einschleusen und Ausschleusen von Gegenständen und/oder Medien in die Durchgangsöffnung aufweisen.

Weitere praktische Ausführungsformen und Vorteile der Erfindung sind nachfolgend im Zusammenhang mit den Zeichnungen beschrieben. Es zeigen:
- Fig. 1: eine erfindungsgemäße Absperrvorrichtung gemäß einer ersten Ausführungsform als Absperrhahn in einer Ansicht eines Längsschnitts durch den Absperrhahn mit dem Absperrkörper in der geöffneten Stellung;
- Fig. 2a: eine Detaildarstellung des in Fig. 1 mit Z gekennzeichneten Bereichs bei einer Belastung der Dichteinrichtung durch ein Fluid in dem Zuströmabschnitt;
- Fig. 2b: eine Detaildarstellung des in Fig. 1 mit Z gekennzeichneten Bereichs bei einer Belastung der Dichteinrichtung durch ein Fluid in dem Absperrraum;
- Fig. 3: eine Detaildarstellung einer alternativen Ausführungsform des in Fig. 1 mit Z gekennzeichneten Bereichs;
- Fig. 4: eine Detaildarstellung einer weiteren alternativen Ausführungsform des in Fig. 1 mit Z gekennzeichneten Bereichs.

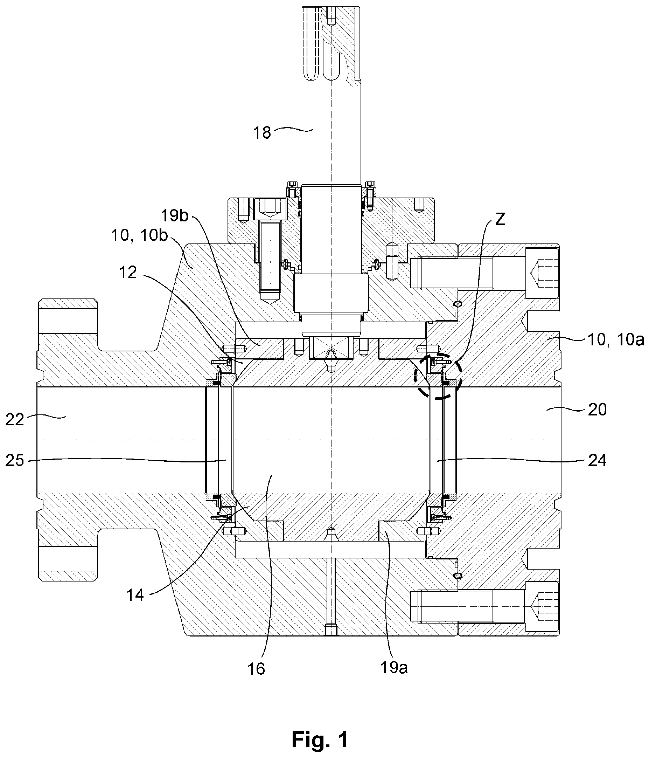

Figur 1 zeigt eine Ausführungsform der erfindungsgemäßen Absperrvorrichtung als Absperrhahn in einer Ansicht eines Längsschnitts entlang einer Mittelebene durch die Absperrvorrichtung. Die Absperrvorrichtung weist ein mehrteilig ausgebildetes Gehäuse 10 mit einem ersten Gehäuseteil 10a und einem zweiten Gehäuseteil 10b auf. Beide Gehäuseteile 10a, 10b sind mit einer Mehrzahl von Schraubenverbindungen lösbar und dichtend miteinander verbunden. In dem Gehäuse 10 ist ein von den beiden Gehäuseteilen 10a, 10b umgebener Absperrraum 12 ausgebildet, in welchem ein aus Stahl gebildeter im Wesentlichen drehsymmetrischer Absperrkörper 14 drehbar angeordnet ist. In Fig. 1 ist der Absperrkörper 14 in einer geöffneten Stellung mit einer den Absperrkörper 14 in der gezeigten Längsschnittebene durchragenden, zylindrischen Durchgangsöffnung 16 gezeigt.

Durch eine Öffnung auf einer in der Fig. 1 oberen Seite des Gehäuses 10 ist ein mit dem Absperrkörper 14 oberseitig drehfest verbundenes Stellglied 18 aus dem Gehäuse 10 herausgeführt. Dabei ist die drehfeste Verbindung zwischen dem Absperrkörper 14 und dem Stellglied 18 mittels einer lösbaren Schraubenverbindung realisiert. Das Stellglied 18 ist orthogonal zu der Durchgangsöffnung 16 angeordnet, so dass der Absperrkörper 14 und die Durchgangsöffnung 16 von der in Fig. 1 gezeigten geöffneten Stellung mittels des Stellglieds 18 um eine gemeinsame Drehachse des Absperrkörpers und des Stellglieds 18 in eine geschlossene Stellung (nicht dargestellt) gedreht werden kann. Beispielsweise kann das Stellglied 18 mit einem motorisch oder manuell betätigbaren Aktor (nicht dargestellt) verbunden sein, welcher eine Drehung des Stellglieds 18 und des Absperrkörpers 14 ausführt.

Zum Zweck eines leichtgängigen Drehens des Absperrkörpers 14 ist dieser unterseitig und oberseitig in zwei in dem Gehäuse 10 fixierten Radiallagern 19a, 19b gelagert. Auch das Stellglied 18 ist mittels Lagern in dem Gehäuse 10 gelagert.

In der in Fig. 1 gezeigten, geöffneten Stellung des Absperrkörpers 14 ist die Durchgangsöffnung 16 fluidal mit einem zylindrischen Zuströmabschnitt 20 und einem zylindrischen Abströmabschnitt 22 verbunden. An dem freien Ende des Zuströmabschnitts 20 und an dem freien Ende des Abströmabschnitts 22 kann jeweils ein Abschnitt einer Fluidleitung (nicht dargestellt) angeschlossen werden. Die Absperrvorrichtung ist somit in eine Fluidleitung integrierbar und durch den stromaufwärts des Absperrraums 12 gelegenen Zuströmabschnitt 20 kann ein Fluid aus der Fluidleitung in die Absperrvorrichtung strömen. Wenn der Absperrkörper 14 in der geöffneten Stellung angeordnet ist, kann das Fluid durch den stromabwärts des Absperrraums 12 gelegenen Abströmabschnitt 22 aus der Absperrvorrichtung abströmen.

Bei der hier beschriebenen Ausführungsform ist der zylindrische Zuströmabschnitt 20 in dem ersten Teilelement 10a des mehrteiligen Gehäuses 10 und der zylindrische Abströmabschnitt 22 in dem zweiten Teilelement 10b des mehrteiligen Gehäuses 10 ausgebildet. Der Zuströmabschnitt 20 und der Abströmabschnitt 22 sind entlang einer gemeinsamen, zentral durch diese beiden zylindrischen Abschnitte 20, 22 verlaufenden und gerade ausgebildeten Längsachse angeordnet und sie liegen einander - getrennt durch den Absperrraum 12 - gegenüber.

In der geschlossenen Stellung des Absperrkörpers (nicht gargestellt) ist der Absperrkörper 14 derart um die Drehachse in dem Absperrraum 12 gedreht, dass der Zuströmabschnitt 20 und der Abströmabschnitt 22 fluidal von dem Absperrraum 12 getrennt sind. Es kann dann kein Fluid von dem Zuströmabschnitt 20 durch die Durchgangsöffnung 16 in den Abströmabschnitt 22 strömen.

In der geöffneten und in der geschlossenen Stellung des Absperrkörpers 14 dichtet eine erste Dichteinrichtung 24 den Absperrraum 12 gegenüber dem Zuströmabschnitt 20 und eine zweite Dichteinrichtung 25 den Absperrraum 12 gegenüber dem Abströmabschnitt 22 ab. Bei der hier beschriebenen Ausführungsform der Absperrvorrichtung sind die erste und die zweite Dichteinrichtung 24, 25 identisch ausgeführt. Die folgende Beschreibung der ersten Dichteinrichtung 24 gilt daher ebenfalls für die zweite Dichteinrichtung 25, wobei der Zuströmabschnitt 20 dann durch den Abströmabschnitt 22 ersetzt ist.

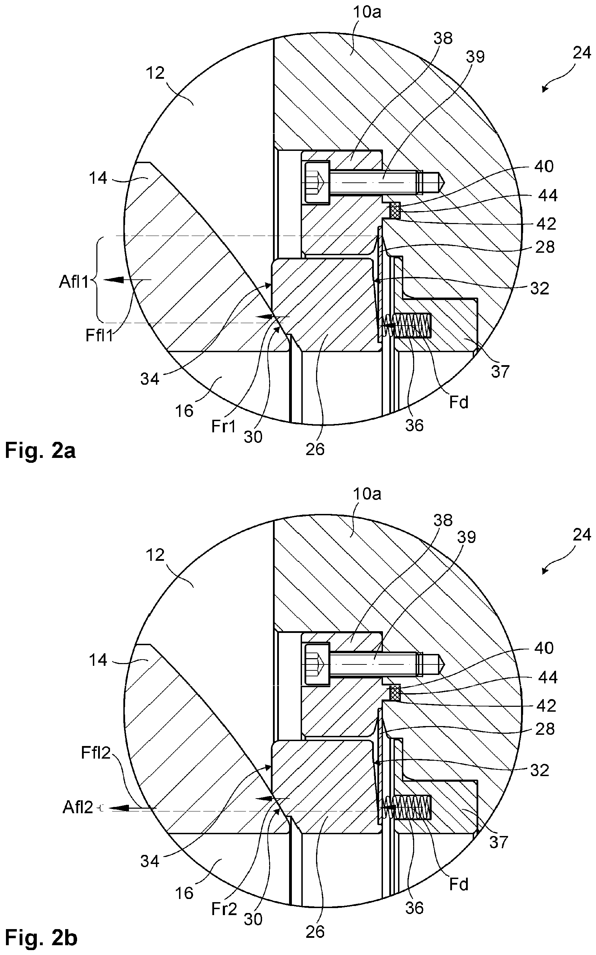

Die Figuren 2a und 2b zeigen einen Ausschnitt der Dichteinrichtung 24 anhand von Detaildarstellungen des in Fig. 1 mit Z gekennzeichneten Bereichs. Die Figuren 2a und 2b sind im Wesentlichen identisch. Sie unterscheiden sich lediglich durch unterschiedliche, schematisch mit Pfeilen dargestellte und nachfolgend beschriebene Belastungsfälle der Dichteinrichtung 24. In Fig. 2a ist die Dichteinrichtung 24 durch ein Fluid in dem Zuströmabschnitt 20 belastet, wohingegen die Dichteinrichtung 24 in Fig. 2b durch ein Fluid in dem Absperrraum 12 belastet ist. Im Folgenden wird zunächst die Dichteinrichtung 24 ohne Berücksichtigung von Belastungsfällen beschrieben. Auf die beiden Belastungsfälle wird weiter unten im Detail eingegangen.

Die Dichteinrichtung 24 der hier beschriebenen und in den Figuren 2a und 2b gezeigten Ausführungsform umfasst ein ringförmiges Dichtelement 26, eine ringförmige, glattflächige Membran 28, eine Mehrzahl von elastischen Elementen 36 sowie ein Montageelement 38.

Das ringförmige Dichtelement 26 ist bei der hier beschriebenen Ausführungsform als Sitzring aus Stahl ausgebildet. Der in den Figuren 2a und 2b gezeigte Querschnitt des Dichtelements 26 basiert auf einer im Wesentlichen quadratischen Grundform, wobei insbesondere eine radial innere und zum Absperrkörper 14 weisende Ecke sowie eine von dem Absperrkörper 14 abgewandte Seite von der quadratischen Grundform abweichen. Die von dem Absperrkörper 14 abgewandte Seite ist mit einem Oberflächenabschnitt in Richtung des Absperrkörpers 14 geneigt. Die radial innere und zum Absperrkörper 14 weisende Ecke weist einen Abschnitt mit einer Oberfläche auf, die zu der Oberfläche des Absperrkörpers 14 komplementär ausgebildet ist. Mit dieser komplementären Geometrie liegt das Dichtelement 26 mit der Oberfläche dichtend an dem Absperrkörper 14 an. Diese Oberfläche bildet somit eine ringförmige Dichtfläche 30 entlang der Umfangsrichtung des Dichtelements 26. Da der Absperrkörper 14 und das Dichtelement 26 aus Stahl gebildet sind, ist die Dichteinrichtung 24 eine metallische Dichtung, welche besonders verschleißbeständig ist.

Die ringförmige, glattflächige Membran 28 ist in dem Ausführungsbeispiel ebenfalls aus Stahl gebildet und weist eine gemeinsame Mittelachse mit dem ringförmigen Dichtelement 26 auf, welche identisch mit der Längsachse des Zuströmabschnitts 20 ist. Mit anderen Worten ausgedrückt, sind das Dichtelement 26 und die Membran 28 koaxial zueinander und mit dem Zuströmabschnitt 20 in dem Gehäuse 10 angeordnet.

Die Membran 28 weist in der hier beschriebenen und gezeigten Ausführungsform einen rechteckigen Querschnitt auf. Außerdem weist die Membran 28 glattflächig ausgebildete Oberflächen auf. Ferner weist die Membran im Vergleich zu dem Dichtelement 26 in der koaxialen Richtung eine geringe Wandstärke auf, weshalb die Membran 28 im Gegensatz zu dem Dichtelement 26 biegeelastisch verformbar ist. Radial außenseitig ist die Membran 28 mittels des weiter unten beschriebenen Montageelements 38 in dem Gehäuse 10 fixiert. Radial innenseitig ist die Membran 28 auf der von dem Absperrkörper 14 abgewandten Seite des Dichtelements 26 stoffschlüssig mit einem radial innenseitigen Bereich des Dichtelements 26 verbunden. Diese Verbindung ist in der Umfangsrichtung kontinuierlich und vollständig dichtend ausgebildet. Das Dichtelement 26 und die Membran 28 sind derart ausgebildet und angeordnet, dass ein an der Verbindung beginnender und in radialer Richtung ausgebildeter Abschnitt der Membran 28 einen in einer von dem Absperrkörper 14 abgewandten Seite des Dichtelements 26 enthaltenen Oberflächenabschnitt in der koaxialen Richtung überlagert. Der von der Membran 28 überlagerte Oberflächenabschnitt des Absperrkörpers 26 umfasst den in Richtung des Absperrkörpers 14 geneigten Oberflächenabschnitt der von dem Absperrkörper 14 abgewandten Seite des Dichtelements 26.

Das Montageelement 38 ist ebenfalls ringförmig ausgebildet. Der Innendurchmesser des Montageelements 38 ist größer als der Außendurchmesser des Dichtelements 26, so dass es möglich ist, das Montageelement 38 radial außenseitig um das Dichtelement 26 und somit raumsparend in dem Gehäuse 10 anzuordnen. Das Montageelement ist in dieser Lage mittels einer Mehrzahl von Montageschrauben 39 in dem Gehäuse 10 fixiert. Radial außen und auf einer von dem Absperrkörper 14 abgewandten Seite ist das Montageelement 38 im Wesentlichen komplementär zu dem Gehäuse 10 ausgebildet. Dabei weisen das Montageelement 38 auf der von dem Absperrkörper 14 abgewandten Seite einen hervorragenden Absatz 40 und das Gehäuse 10 eine Nut 42 auf. In der bestimmungsgemäßen Anordnung des Montageelements 38 drückt die Mehrzahl der Montageschrauben 39 das Montageelement 38 gegen das Gehäuse 10. In der Folge drückt der hervorragende Absatz 40 ein als Dichtring ausgebildetes statisches Dichtelement 44 derart in die Nut 42, dass eine dichte Verbindung zwischen dem Montageelement 38 und dem Gehäuse 10 hergestellt ist. Das Montageelement 38 drückt dabei auch die ringförmige Membran 28 radial außenseitig gegen das Gehäuse 10. Durch das Andrücken der Membran 28 mit dem Montageelement 38 wird zwischen dem Membran 28 und dem Montageelement 38 eine dichtende Pressverbindung hergestellt.

Auf einer von dem Absperrkörper 14 abgewandten Seite der Membran 28 ist die Mehrzahl von elastischen Elementen 36 angeordnet. Die elastischen Elemente 36 sind als Druckfedern ausgebildet. Dabei sind die Druckfedern äquidistant um den Zuströmkanal 20 angeordnet und derart ausgerichtet, dass sie mit einer Federkraft Fd auf den von dem Absperrkörper 14 abgewandten Oberflächenabschnitt der Membran 28 drücken, welcher das Dichtelement 26 in der koaxialen Richtung überlagert. Dadurch wird das Dichtelement 26 mit der Federkraft Fd gegen den Absperrkörper 14 gedrückt.

Die elastischen Elemente 36 sind bei der hier beschriebenen Ausführungsform der Absperrvorrichtung in Vertiefungen eines optionalen Tragrings 37 angeordnet. Der Tragring 37 ist koaxial zu der Membran 28 um dem Zuströmabschnitt 20 in dem Gehäuse 10 angeordnet. Bei einer alternativen Ausführungsform der Absperrvorrichtung ist es möglich, auf den Tragring 37 zu verzichten und die elastischen Elemente 36 beispielsweise in direkt in das Gehäuse 10 eingebrachten Vertiefungen anzuordnen. Dadurch wird die Anzahl der Elemente der Absperrvorrichtung reduziert. Bei Verwendung des Tragrings 37 vereinfacht sich jedoch die Montage der elastischen Elemente 36.

Zwischen einem von dem Absperrkörper 14 abgewandten Oberflächenabschnitt der Membran 28 und dem Tragring 37 ist ein Spalt ausgebildet, welcher fluidal mit dem Zuströmabschnitt 20 in Verbindung steht. Der Spalt ist derart schmal dimensioniert, dass zwar ein Fluid aus der Fluidleitung in den Spalt einströmen kann, die Membran 28 jedoch bei einer aus der Richtung des Absperrkörpers 14 auf die Membran 28 wirkenden Kraft über den schmalen Spalt hinweg elastisch gegen den Tragring 37 angedrückt werden kann. Wenn ein Fluid aus der Fluidleitung in den Spalt eindringt, übt es über den von dem Absperrkörper 14 abgewandten Oberflächenabschnitt der Membran 28 einen Druck auf die Membran 28 in Richtung des Absperrkörpers aus. Die elastisch verformbare Membran 28 kann somit gegen den Oberflächenabschnitt der von dem Absperrkörper 14 abgewandten Seite des Dichtelements 26, welchen sie überlagert, gedrückt werden und das Dichtelement 26 mit der Dichtfläche 30 gegen den Absperrkörper 14 drücken. Dadurch kann eine Dichtwirkung zwischen der Membran 28 und dem Dichtelement 26 sowie zwischen dem Dichtelement 26 und dem Absperrkörper 14 allein durch ein an der Membran 28 anstehendes Fluid erzielt werden. Aufgrund des in Richtung des Absperrkörpers 14 geneigten Oberflächenabschnitts der von dem Absperrkörper 14 abgewandten Seite des Dichtelements 26 wird eine Kontaktfläche zwischen der Membran 28 und dem Dichtelement 26 mit steigendem Druck größer. Die das Dichtelement 26 gegen den Absperrkörper 14 drückende Kraft wird somit erhöht, wenn der Fluiddruck von dem Fluid auf die Membran 26 zunimmt.

Bei der hier beschriebenen Ausführungsform der Absperrvorrichtung weist die von dem Absperrkörper 14 abgewandte Seite des Dichtelements 26 eine Wirkfläche 1 32 und eine dem Absperrkörper zugewandte Seite des Dichtelements 26 eine Wirkfläche 2 34 auf. Dabei ist die Wirkfläche 1 32 größer als die Wirkfläche 2 34.

Die Wirkfläche 1 32 ist die Flächenkomponente der von dem Absperrkörper 14 abgewandten Seite des Dichtelements 26, welche senkrecht zu der koaxialen Richtung ausgerichtet ist und mit dem Absperrraum 12 in fluidaler Verbindung steht. Mit anderen Worten ausgedrückt, ist die Wirkfläche 1 32 der Anteil des Oberflächenabschnitts der von dem Absperrkörper 14 abgewandten Seite des Dichtelements 26, mit welchem die Membran 28 überlagernd angeordnet ist und über welchen eine parallel zur koaxialen Richtung wirkende Kraft ausgeübt werden kann.

Durch die mit dem Dichtelement 26 dichtend verbundene Membran 26 sind der Absperrraum 12, die Wirkfläche 1 32 und die Wirkfläche 2 34 fluidal von dem Zuströmabschnitt getrennt. Wenn sich ein Fluid in dem Absperrraum 12 befindet, kann das Fluid in den Bereich zwischen dem Dichtelement 26 und der Membran 28 bis zu deren Verbindung eindringen und dort über die Wirkfläche 1 32 eine in Richtung des Absperrkörpers 14 gerichtete Kraft auf das Dichtelement 26 ausüben.

Die Wirkfläche 2 34 ist die Flächenkomponente der dem Absperrkörper 14 zugewandten Seite des Dichtelements 26, welche senkrecht zu der koaxialen Richtung ausgerichtet ist und mit dem Absperrraum 12 in fluidaler Verbindung steht. Mit anderen Worten ausgedrückt, ist die Wirkfläche 2 34 der Anteil des Oberflächenabschnitts der dem Absperrkörper 14 zugewandten Seite des Dichtelements 26, über welchen ein Fluid in dem Absperrraum 12 eine parallel zur koaxialen Richtung wirkende Kraft ausüben kann. Dieser Anteil umfasst bei der hier beschriebenen Ausführungsform den in den Figuren 2a und 2b senkrecht zu der koaxialen Richtung verlaufenden Oberflächenabschnitt sowie die senkrecht zu der koaxialen Richtung ausgerichtete Flächenkomponente des geometrisch komplementär zu dem Absperrkörper 14 ausgebildeten Abschnitts. Wenn sich ein Fluid in dem Absperrraum 12 befindet, übt das Fluid über die Wirkfläche 2 34 eine von dem Absperrkörper 14 weg gerichtete Kraft auf das Dichtelement 26 aus.

Mit der vorstehend beschriebenen Dichteinrichtung 24 ist daher die "Double-Piston-Funktion" realisiert. Das bedeutet, die Dichteinrichtung 24 funktioniert (d.h. dichtet) in zwei Belastungsfällen. Sie dichtet in einem ersten Belastungsfall den Absperrraum 12 gegenüber einem Fluid in dem Zuströmabschnitt 20 ab, wie in Fig. 2a gezeigt, und sie dichtet in einem zweiten Belastungsfall den Zuströmabschnitt 20 gegenüber einem Fluid in dem Absperrraum 12 ab, wie in Fig. 2b gezeigt. Die Belastungsfälle werden im Folgenden erläutert.

Wenn sich ein Fluid in dem ersten Belastungsfall in dem Zuströmabschnitt 20 befindet, kann das Fluid - wie bereits vorstehend beschrieben - in den Spalt zwischen der Membran 28 und dem Tragring 37 eindringen und einen Fluiddruck auf die von dem Absperrkörper 14 abgewandte Seite der Membran 28 ausüben. Dabei verursacht nicht der Fluiddruck auf die gesamte von dem Absperrkörper 14 abgewandte Seite der Membran 28 eine Kraft in Richtung des Absperrkörpers 14, sondern nur der Fluiddruck auf einen Abschnitt Afl1 dieser Seite. Der Abschnitt Afl1 umfasst den gesamten Umfang der ringförmigen Membran 28. In der radialen Richtung erstreckt sich der Abschnitt Afl1 von einem inneren Radius der ringförmigen Membran 28, bis zu welchem auf der radial inneren Seite des Dichtelements 26 das Fluid ansteht, bis zu einem radial äußeren Radius der Membran, bis zu welchem das Fluid dort ansteht. Der Abschnitt Afl1 erstreckt sich somit in der radialen Richtung entlang der Membran 28 von einem Punkt radial außerhalb der Innenseite des Dichtelements 26 (aufgrund eines Fluid-Gegendrucks aus dem Spalt zwischen Absperrkörper 14 und Dichtelement 26) bis hin zu einem äußeren Radius der Membran 28, bis zu dem das Fluid vordringt. Der Wirk-Fluiddruck des Abschnitts Afl1 verursacht somit eine in Richtung des Absperrkörpers 14 gerichtete Kraft Ffl1.

Die von dem Fluid in dem Zuströmabschnitt 20 verursachte Kraft Ffl1 und die von den Druckfedern 36 verursachte Kraft Fd wirken additiv auf die Membran 28 und das Dichtelement 26, so dass das Dichtelement 26 mit einer Gesamtkraft Fr1 gegen den Absperrkörper 14 gedrückt wird.

Wenn sich ein Fluid in dem zweiten Belastungsfall in dem Absperrraum 12 befindet, kann das Fluid gemäß Fig. 2b über die Wirkfläche 1 32 und die Wirkfläche 2 34 einen Fluiddruck auf das Dichtelement 26 ausüben. Da der Fluiddruck auf die Wirkfläche 1 und die Wirkfläche 2 identisch ist und die Wirkfläche 1 32, wie oben beschrieben, größer ist als die Wirkfläche 2 34, wird das Dichtelement 26 von dem Fluid in dem Absperrraum 12 gegen den Absperrkörper 14 gedrückt. In Fig. 2b ist die Wirkfläche 1 32 um einen Abschnitt Afl2 größer als die Wirkfläche 2 34 und der auf den Abschnitt Afl2 wirkende Fluiddruck verursacht die in Richtung des Absperrkörpers 14 gerichtete Kraft Ffl2. Der Abschnitt Afl2 umfasst den gesamten Umfang der ringförmigen Membran 28. In der radialen Richtung erstreckt sich der Abschnitt Afl2 von einem inneren Radius des Dichtelements 26, an welchem das ringförmige Dichtelement 26 mit der ringförmigen Membran 28 verbunden ist und bis zu welchem das Fluid ansteht, bis zu einem radial äußeren Radius des Dichtelements 26, welcher mit der radial inneren Grenze der Dichtfläche 30 übereinstimmt.

Die von dem Fluid in dem Absperrraum 12 verursachte Kraft Ffl2 und die von der Druckfeder 36 verursachte Kraft Fd wirken additiv auf das Dichtelement 26, welches im Ergebnis mit einer Gesamtkraft Fr2 gegen den Absperrkörper 14 gedrückt wird.

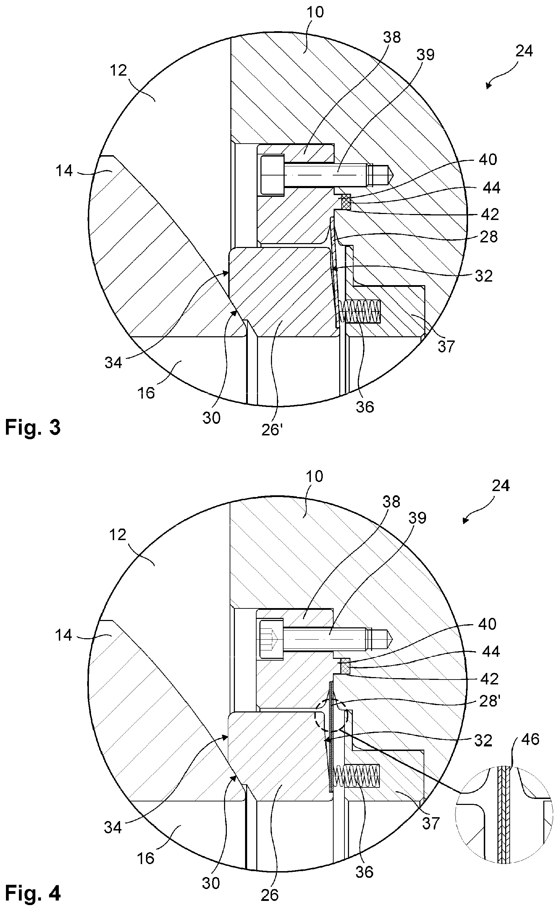

In Fig. 3 ist eine weitere, alternative Ausführungsform der Dichteinrichtung 24 gezeigt. Diese Ausführungsform unterscheidet sich von der in Zusammenhang mit den Figuren 2a und 2b beschriebenen Ausführungsform dadurch, dass das Dichtelement 26' in der koaxialen Richtung eine größere Wandstärke aufweist als das in den Figuren 2a und 2b gezeigte Dichtelement 26. Durch diese größere Wandstärke bei einer ansonsten im Wesentlichen identisch ausgebildeten Absperrvorrichtung wird die Membran 28 durch das bestimmungsgemäß angeordnete Dichtelement 26' elastisch verformt. Insbesondere der Innenradius der Membran 28 wird in der koaxialen Richtung elastisch von dem Absperrkörper 14 weggedrückt, so dass die Membran 28 eine leichte Krümmung und Neigung aufweist. Dadurch ist die Breite des Spaltes zwischen der Membran 28 und dem Tragring 37 reduziert und eine in Richtung des Absperrkörpers 14 wirkende Rückstellkraft wird zusätzlich zu Kräften durch die Druckfedern 36 und zu Fluiddruckkräften von der elastisch verformten Membran 28 auf das Dichtelement 26' ausgeübt.

In Fig. 4 ist eine weitere, alternative Ausführungsform der Dichteinrichtung 24 gezeigt. Diese Ausführungsform unterscheidet sich von der in Zusammenhang mit den Figuren 2a und 2b beschriebenen Ausführungsform dadurch, dass die Membran 28' nicht einteilig, sondern als ein Paket aus einer Mehrzahl von parallel angeordneten metallischen Blechen 46 ausgebildet ist. Die in dem Paket parallel angeordneten Bleche 46 weisen jeweils die Form eines flachen Rings auf, wobei die Bleche 46 in koaxialer Richtung übereinander gestapelt angeordnet sind. Die Gesamtstärke der in dem Paket angeordneten Bleche 46 ist im Querschnitt im Wesentlichen identisch mit der Wandstärke der Membran 28. Durch Variation der Zahl und Dimension der Bleche 46 kann die Auslegung und damit die Anpresskraft durch eine biegeelastische Rückstellkraft an den jeweiligen Anwendungsfall angepasst werden, insbesondere wenn die Bleche 46 in einer Anordnung ähnlich wie in Figur 3 eingesetzt werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Gehäuse
- 10a: erster Gehäuseteil
- 10b: zweiter Gehäuseteil
- 12: Absperrraum
- 14: Absperrkörper
- 16: Durchgangsöffnung
- 18: Stellglied
- 19a: unterseitiges Radiallager
- 19b: oberseitiges Radiallager
- 20: Zuströmabschnitt
- 22: Abströmabschnitt
- 24: erste Dichteinrichtung
- 25: zweite Dichteinrichtung
- 26, 26': Dichtelement, Sitzring
- 28, 28': glattflächige Membran
- 30: Dichtfläche
- 32: Wirkfläche 1
- 34: Wirkfläche 2
- 36: elastisches Element, Druckfeder
- 37: Tragring
- 38: Montageelement
- 39: Montageschrauben
- 40: hervorragenden Absatz
- 42: Nut
- 44: statisches Dichtelement
- 46: Paket aus einer Mehrzahl von parallel angeordneten metallischen Blechen

- Z: Detailbereich
- Afl1: Abschnitt einer von dem Absperrkörper abgewandten Seite der Membran, über den ein Fluid in dem Zuströmkanal eine Kraft ausübt
- Afl2: Abschnitt einer von dem Absperrkörper abgewandten Seite des Dichtelements, über den ein Fluid in dem Absperrraum eine Kraft ausübt
- Ffl1: Fluiddruck auf den Abschnitt Afl1
- Ffl2: Fluiddruck auf den Abschnitt Afl2
- Fd: Federkraft
- Fr1: Gesamtkraft im ersten Belastungsfall
- Fr2: Gesamtkraft im zweiten Belastungsfall

## Patentansprüche

1. Absperrvorrichtung mit
- einem Gehäuse (10), das einen Absperrraum (12) aufweist,
- einem drehbar oder verschiebbar in dem Absperrraum gelagerten Absperrkörper (14), welcher eine Durchgangsöffnung (16) aufweist und über ein Stellglied (18) derart angeordnet ist, dass der Absperrkörper (14) in mindestens eine geöffnete Stellung und in mindestens eine geschlossene Stellung bringbar ist,
- mindestens einem Zuströmabschnitt (20) und mindestens einem Abströmabschnitt (22) zur Integration der Absperrvorrichtung in eine Fluidleitung,
- wobei der Zuströmabschnitt (20) und der Abströmabschnitt (22) in der geöffneten Stellung des Absperrkörpers (14) mittels der Durchgangsöffnung (16) durchströmbar verbunden sind und in der geschlossenen Stellung des Absperrkörpers (14) der Zuströmabschnitt (20) und der Abströmabschnitt (22) fluidal separiert sind oder ein Durchfluss vom Zuströmabschnitt (20) zum Abströmabschnitt (22) zumindest gedrosselt ist, und
- mindestens einer zwischen dem Absperrkörper (14) und dem Gehäuse (10) angeordneten Dichteinrichtung (24), mittels welcher der Absperrraum (12) gegenüber dem Zuströmabschnitt (20) und/oder dem Abströmabschnitt (22) abgedichtet ist,
**dadurch gekennzeichnet, dass**
- die Dichteinrichtung (24) mindestens ein ringförmiges Dichtelement (26) und eine ringförmige, glattflächige Membran (28) aufweist,
- wobei das Dichtelement (26) und die Membran (28) den Zuströmabschnitt (20) und/oder den Abströmabschnitt (22) umschließend in dem Gehäuse (10) angeordnet sind,
- wobei das Dichtelement (26) mit einer Dichtfläche (30) an dem Absperrkörper (14) anliegt und
- wobei das Dichtelement (26), die Membran (28), der Absperrkörper (14) und das Gehäuse (10) dichtend zusammenwirkend angeordnet sind.

2. Absperrvorrichtung nach Anspruch 1, **dadurch gekennzeichnet, dass** eine Wirkfläche 1 (32) auf einer von dem Absperrkörper (14) abgewandten Seite des Dichtelements (26) und eine Wirkfläche 2 (34) auf einer dem Absperrkörper (14) zugewandten Seite des Dichtelements (26) in fluidaler Verbindung mit dem Absperrraum (12) ausgebildet und fluidal von dem Zuströmabschnitt (20) und/oder dem Abströmabschnitt (22) getrennt sind, wobei die Wirkfläche 1 (32) größer ist als die Wirkfläche 2 (34).

3. Absperrvorrichtung nach Anspruch 2, **dadurch gekennzeichnet, dass** die ringförmige Membran (28) auf der von dem Absperrkörper (14) abgewandten Seite des Dichtelements (16) radial innenseitig mit einem radial innenseitigen Bereich des ringförmigen Dichtelements (26) verbunden ist.

4. Absperrvorrichtung nach einem der vorstehenden Ansprüche, **dadurch gekennzeichnet, dass** die ringförmige Membran (28) und das Dichtelement (26) stoffschlüssig und/oder durch Klemmen miteinander verbunden sind.

5. Absperrvorrichtung nach einem der vorstehenden Ansprüche, **dadurch gekennzeichnet, dass** die ringförmige Membran (28) radial außenseitig formschlüssig und/oder kraftschlüssig gegenüber dem Gehäuse (10) fixiert ist.

6. Absperrvorrichtung nach einem der vorstehenden Ansprüche, **dadurch gekennzeichnet, dass** die Dichteinrichtung (24) mindestens ein elastisches Element (36) aufweist, welches derart angeordnet ist, dass es das Dichtelement (26) mit einer Kraft (Fd) gegen den Absperrkörper (14) drückt.

7. Absperrvorrichtung nach einem der vorstehenden Ansprüche, **dadurch gekennzeichnet, dass** die Membran (28) in ihrem bestimmungsgemäßen Einbauzustand mechanisch vorgespannt und so angeordnet ist, dass das Dichtelement (26) mittels der Membran (28) gegen den Absperrkörper (14) gedrückt wird.

8. Absperrvorrichtung nach einem der vorstehenden Ansprüche in Verbindung mit Anspruch 2, **dadurch gekennzeichnet, dass** das Dichtelement (26) auf einer von dem Absperrkörper (14) abgewandten Seite zumindest teilweise derart in Richtung des Absperrkörpers (14) geneigt und/oder gekrümmt ist, dass ein Spaltmaß zwischen dem Dichtelement (26) und der Membran (28) in radialer Richtung zunimmt.

9. Absperrvorrichtung nach einem der vorstehenden Ansprüche in Verbindung mit Anspruch 5, **dadurch gekennzeichnet, dass** die Dichteinrichtung (24) radial außenseitig ein dicht gegenüber dem Gehäuse (10) angeordnetes Montageelement (38) aufweist, welches die Membran (28) radial außenseitig in dem Gehäuse (10) fixiert.

10. Absperrvorrichtung nach dem vorstehenden Anspruch, **dadurch gekennzeichnet, dass** das Montageelement (38) lösbar in dem Gehäuse (10) fixiert ist.

11. Absperrvorrichtung nach einem der beiden vorstehenden Ansprüche, **dadurch gekennzeichnet, dass** das Montageelement (38) auf einer von dem Absperrkörper (14) abgewandten Seite einen umlaufenden, hervorragenden Absatz (40) aufweist, welcher in einer in dem Gehäuse (10) komplementär ausgebildeten Nut (42) angeordnet ist, wobei zusätzlich ein umlaufendes statisches Dichtelement (44) in der Nut (42) angeordnet ist.

12. Absperrvorrichtung nach einem der drei vorstehenden Ansprüche, **dadurch gekennzeichnet, dass** die ringförmige Membran (28) und das Montageelement (38) stoffschlüssig und/oder durch Klemmen miteinander verbunden sind.

13. Absperrvorrichtung nach einem der vorstehenden Ansprüche, **dadurch gekennzeichnet, dass** die glattflächige Membran (28) aus einem Metall, einer Legierung oder einem Kunststoff gebildet ist.

14. Absperrvorrichtung nach dem vorstehenden Anspruch, **dadurch gekennzeichnet, dass** die Membran (28) als ein Paket aus einer Mehrzahl von parallel angeordneten metallischen Blechen (46) gebildet ist.

15. Absperrvorrichtung nach einem der vorstehenden Ansprüche, **dadurch gekennzeichnet, dass** die Absperrvorrichtung für mindestens einen der folgenden Parameterbereiche ausgelegt ist:
- Nennweite der Fluidleitung: 0,5" bis 56";
- Druck in der Fluidleitung: Vakuum bis 1500 bar;
- Temperatur des Fluids in der Fluidleitung: -200°C bis +650°C.
